# EUROPÄISCHE PATENTSCHRIFT

(11) **EP 2 159 553 B1**
(45) Veröffentlichungstag und Bekanntmachung des Hinweises auf die Patenterteilung: **05.06.2019**
(21) Anmeldenummer: 09008243.9
(22) Anmeldetag: 24.06.2009
(51) Int. Cl.: G01F 15/00, F16L 55/027, B67D 7/78

(54) **Anlage und Verfahren zur Abgabe von Flüssigkeit aus einem mehrere Kammern enthaltenden Tankwagen im Wesentlichen durch Schwerkraft**
System and method for removing liquid from a tanker containing several chambers mainly using gravity
Installation et procédé de dépôt de liquide à partir d'un camion-citerne comprenant plusieurs chambres, essentiellement par la force de gravité

(30) Priorität: 29.07.2008 DE 102008035349
(43) Veröffentlichungstag der Anmeldung: 03.03.2010
(73) Patentinhaber: Saeta GmbH & Co. KG, 22880 Wedel (DE)
(72) Erfinder: Haar, Thomas, 25469 Halstenbek (DE)
(74) Vertreter: Hauck Patentanwaltspartnerschaft mbB

(56) Entgegenhaltungen:
- EP-A1- 1 564 475
- DE-C1- 19 733 715

## Beschreibung

Die Erfindung bezieht sich auf eine Anlage nach Patentanspruch 1 bzw. ein Verfahren nach Patentanspruch 4.

Es ist bekannt, Flüssigkeiten, die in Kammern eines Tankwagens enthalten sind, entweder über Schwerkraft oder den Einsatz von Pumpen abzugeben. Bei der vorliegenden Erfindung wird insbesondere die Abgabe über Schwerkraft in Betracht gezogen. Die einzelnen Kammern weisen normalerweise sogenannte Bodenventile auf, die über Leitungsstücke mit Kupplungen verbunden sind. Die Kupplungen sind üblicherweise Befüllkupplungen und werden mit einem Ladearm oder dergleichen verbunden, um die Kammern aus einem Depot mit einer Flüssigkeit zu füllen. Die Flüssigkeiten können durchaus unterschiedlicher Natur sein. Die Abgabe aus den Kammern erfolgt entweder direkt oder über Sammelleitungen oder einen Kollektor der Tankwagen. Derartige Kollektoren kreuzen die Leitungsstücke zwischen Bodenventil und Befüllkupplung, wobei an den Kreuzungspunkten Ventile angeordnet sind, um eine oder mehrere gewünschte Kammern an die Abgabeleitung anzuschließen. In der Abgabeleitung, die sich an den Kollektor anschließt, befindet sich üblicherweise ein Volumenzähler aufströmseitig von einem Abgabeventil, das am Ende der Abgabeleitung angeordnet ist. Für die Abgabe von Flüssigkeit wird das Abgabeventil geöffnet. Es wird geschlossen, wenn das gewünschte Volumen abgegeben worden ist oder Umstände eingetreten sind, welche eine weitere Abgabe unzulässig werden lassen. Dies ist der Fall bei Auftreten eines bestimmten Gasanteils, das in einem volumetrischen Messsystem naturgemäß zu einer Fehlmessung führt.

Aus EP 0035217 A2 ist eine Vorrichtung zur Verhinderung des Mitmessens gasförmiger Beimengungen bei der Abgabe von Flüssigkeiten bekannt geworden, bei der eine Druckmessvorrichtung den Druck einer geodätischen Zulaufhöhe oberhalb des Druckmesspunktes misst. Die Absperrarmatur, die im Querschnitt verstellbar ist, wird entsprechend dem Ausgangssignal der Druckmessvorrichtung betätigt. Gelangt der gemessene Druck unter einen vorgegebenen Wert, wird der Querschnitt des Abgabeventils verringert. Hierbei wird von der Tatsache Gebrauch gemacht, dass solange ein ausreichender positiver Druck vor dem Volumenzähler ansteht, der Anteil gasförmiger Beimengungen unterhalb zulässiger Grenzen liegt. Fällt der Druck vor dem Mengenzähler ab bzw. wegen Abnahme der geodätischen Zulaufhöhe bei der Restentleerung eines Behälters, ist hiermit ein Indikator gegeben, dass der Anteil gasförmiger Beimengungen ansteigt. Hierbei wird von der Erkenntnis Gebrauch gemacht, dass bei niedrigem Flüssigkeitspegel in der Kammer durch Wirbelbildung vermehrt Gas in die Flüssigkeit eingetragen wird.

Aus DE 19540884 A1 ist ein Verfahren zum Messen des Volumens durchströmender Flüssigkeiten bekannt geworden, bei dem der Gasanteil einer eine Leitungsstrecke durchströmenden Flüssigkeit erfasst und die Abweichung des erfassten Gasanteils von einem zulässigen Wert ermittelt wird. Der Volumenstrom der Flüssigkeit wird in Abhängigkeit von der ermittelten Abweichung in mehreren Stufen oder stetig beeinflusst. Der durch Selbstausgasung austretende Gasanteil in der Leitungsstrecke wird gesammelt. Ferner wird das Niveau der Flüssigkeit erfasst und der ausgetretene Gasanteil abgegeben, sobald das Niveau einen bestimmten Wert erreicht hat. Mit dieser Messtechnik kann der Flüssigkeitsstrom entlang einer vorgegebenen Eichfehlergrenze bis nahe zur getrennten Flüssigkeit/Luftphasenströmung runtergeregelt werden, ohne dass die Flüssigkeitsabgabe unterbrochen werden muss und die Messanlage einen unzulässigen Fehler macht. Die eichpflichtige Flüssigkeitsabgabe kann mithin sehr effizient ohne häufige lästige Ein- und Abschaltvorgänge der Messanlage erfolgen.

Aus EP 0895960 B1 bzw. DE 197 33 715 C1 ist eine Anlage zur Abgabe von Flüssigkeit aus einem mehrere Kammern enthaltenden Tankwagen im Wesentlichen durch Schwerkraft bekannt geworden, bei der ein Gasblasensensor aufströmseitig von einem Volumenzähler in einer Abgabeleitung angeordnet ist, die ihrerseits im Anschluss an einen Kollektor zwischen den Bodenventilen und den Befüllkupplungen eines Tankwagens verbunden ist. Die bekannte Anlage enthält ferner einen Drucksensor aufströmseitig vom Volumenzähler, der den Druck der geodädischen Zulaufhöhe oberhalb des Messpunktes misst und ein Drucksignal abgibt, wenn der Druck einen unteren Wert erreicht. Ferner ist ein Leermeldesensor unmittelbar aufströmseitig vom Abgabeventil angeordnet. Eine elektronische Steuervorrichtung, welche die Signale vom Gasblasensensor, vom Leermeldesensor und vom Volumenzähler erhält, ermöglicht folgende Verfahrensweise: Während der Flüssigkeitsabgabe misst der Gasblasensensor den Gasanteil der abgegebenen Flüssigkeit, und die elektronische Steuervorrichtung erzeugt ein Signal für das Abgabeventil, wenn der Gasanteil einen vorgegebenen Wert überschreitet. Während der Flüssigkeitsabgabe wird der Druck der geodätischen Zulaufhöhe oberhalb eines Druckmesspunktes gemessen und das Abgabeventil in seinem Strömungsquerschnitt gedrosselt, wenn der Druck einen vorgegebenen unteren Wert erreicht. Das Abgabeventil wird geschlossen, wenn der Gasblasensensor einen vorgegebenen zweiten Wert für den Gasanteil ermittelt oder der Leemeldesensor aufströmseitig vom Volumenzähler anspricht, was einer vorgegebenen Restmenge in der Abgabeleitung bzw. im Kollektor entspricht. Die Abgabeleitung wird belüftet und die elektronische Registrierung der Zählsignale des Volumenzählers wird gestoppt. Das Abgabeventil wird anschließend für die Restentleerung geöffnet, wobei das Bodenventil geschlossen ist oder wieder geschlossen wird, wenn ein Leermeldesensor kurz vor oder im Abgabeventil die Abwesenheit von Flüssigkeit meldet. Das Volumen der Restmenge wird in der elektronischen Steuervorrichtung zu dem bis dahin registrierten Volumenwert addiert. Die Anordnung eines Druckmessers hat zur Folge, dass ein Unterdruck aufgrund der Strömungsverhältnisse bei der Abgabe nicht zugelassen werden kann, weil dieser die Abgabe drosseln würde, ohne dass eine Notwendigkeit besteht. Bei der bekannten Anlage ist es daher erforderlich, den Unterdruck stets unterhalb der Position des Drucksensors zu begrenzen.

Wie bereits erwähnt, wird das Volumen bei der Flüssigkeitsabgabe volumetrisch bestimmt, beispielsweise mit Hilfe eines Impellers. Die Genauigkeit einer derartigen Messung hängt u. a. davon ab, welches Strömungsverhalten die Flüssigkeit aufweist. Daher ist bereits aus US 5529093 ein sogenannter Gleichrichter bekannt geworden, der einem volumetrischen Volumenzähler vorgeschaltet ist. Der Gleichrichter besteht aus einer Vielzahl von parallelen Kanälen, die beispielsweise Rundquerschnitt aufweisen und die Strömung einprägen, damit eine genaue Messung ermöglicht wird.

Der Erfindung liegt daher die Aufgabe zu Grunde, eine Anlage und ein Verfahren zur Abgabe von Flüssigkeit aus einem mehrere Kammern enthaltendenen Tankwagen durch Schwerkraft zu schaffen, mit der die Abgabemenge pro Zeiteinheit erhöht werden kann.

Diese Aufgabe wird durch die Merkmale der Ansprüche 1 und 4 gelöst.

Bei der erfindungsgemäßen Anlage ist die Abgabeleitung einschließlich zugeordneter Strömungsbauteile so ausgelegt, dass bei der Abgabe von Flüssigkeit ein Unterdruck über den Gasblasendetektor hinaus - entgegen der Strömungsrichtung gesehen - erzeugt bzw. zugelassen wird. Dabei hat sich herausgestellt, dass die Abgabemenge pro Zeiteinheit signifikant erhöht werden kann. Der Wegfall eines Druckmessers, wie er bei der bekannten Anlage verwendet wird, ist ohne weiteres kompensierbar durch eine ausreichende Sensierung der Gasblasen mit Hilfe eines an sich bekannten Gasblasendetektors.

Die erfindungsgemäß erzielte erhöhte Abgabemenge führt naturgemäß zu einer Erhöhung der Strömungsgeschwindigkeit. Im Bereich des Krümmers wird die Strömung entlang der außen liegenden Wand gedrückt, was die Vergleichmäßigung bzw. Einprägung der Strömung auf einer relativen kurzen Strecke bis zum Volumenzähler trotz eines Gleichrichters erschwert. Um daher diesen negativen Effekt bei der Mengenerhöhung auszugleichen, sieht eine Ausgestaltung der Erfindung vor, dass zwischen dem Ausgang des Krümmers und im Abstand zum Gleichrichter in der Abgabeleitung eine Leitvorrichtung in Form von in Strömungsrichtung sich erstreckenden Leitflächen angeordnet ist.

Die Leitbleche bilden ein Kreuz, wobei der Kreuzungspunkt in der Achse der Leitung liegt und die Leitbleche sich in der Ebene des Krümmungsradius bzw. senkrecht dazu erstrecken. Die Länge einer derartigen Leitvorrichtung ist vorzugsweise größer als der Durchmesser der Leitung und kleiner als der doppelte Durchmesser der Leitung. Der Gasblasensensor ist aufströmseitig nahe an der Leitvorrichtung angeordnet.

Nach einer weiteren Ausgestaltung der Erfindung ist der Abstand der Leitvorrichtung von dem Gleichrichter relativ klein und beträgt etwa 10 - 15 cm.

Der Gasblasensensor zur Steuerung der Abgabe der Flüssigkeit befindet sich vorzugsweise im Krümmer, und ein Leermeldesensor befindet sich vorzugsweise aufströmseitig nahe dem Abgabeventil, was an sich bekannt ist.

Wie sich herausgestellt hat, hat die Leitvorrichtung die Wirkung dass der Gesamtquerschnitt der Strömung aufgeteilt wird, wobei jeweils nur die Hälfte der Strömung auf die jeweilige Außenwand von Rohrwand und Leitvorrichtung wirkt. Die Reduktion des nach außen gerichteten Vektors verringert die durch diesen verursachten Querströmungen und Turbulenzen. Das Blech, das auf dem Krümmungsradius des Krümmers tangential verläuft, wirkt sich bei höheren Strömungsgeschwindigkeiten und das senkrecht dazu verlaufende Blech wirkt sich bei kleineren Strömungsgeschwindigkeiten günstig aus. Im Verein mit dem nachgeschalteten Gleichrichter, der vorzugsweise in geringem Abstand nachgeordnet ist, ist die Strömung ausreichend vergleichmäßigt, um eine den Eichbestimmungen genügende genaue Mengenmessung vorzunehmen. Leitvorrichtung und Gleichrichter helfen eine lange gerade Rohrleitung vermeiden, für die häufig kein Platz im Tankwagen vorhanden ist.

Mit der Erfindung kann die Abgabemenge pro Zeiteinheit einer erfindungsgemäßen Anlage eine erhebliche Steigerung erfahren. Ein weiterer Vorteil der Erfindung liegt im Wegfall der Druckmessung, die einen apparativen und messtechnischen Aufwand erfordert.

Die Erfindung wird nachfolgend anhand eines in einer Zeichnung dargestellten Ausführungsbeispiels näher erläutert.
- Fig. 1: zeigt schematisch eine Anlage nach der Erfindung.
- Fig. 2: zeigt eine Frontansicht der Leitvorrichtung nach Fig. 1.

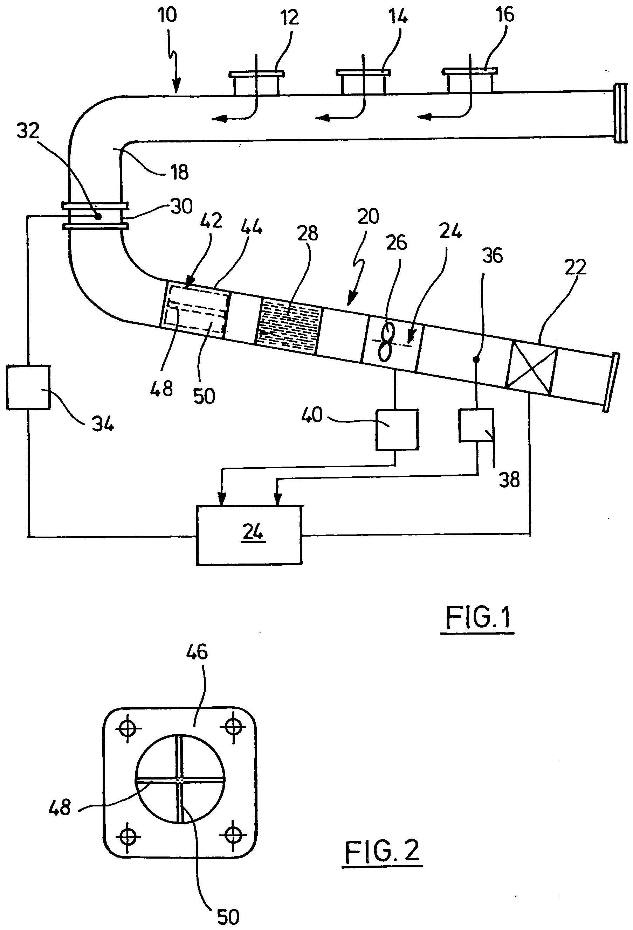

In Figur 1 ist ein Kollektor 10 gezeigt, der einem Tank eines nicht gezeigten Tankwagens zugeordnet ist, beispielsweise unterhalb des Tanks verläuft und über einzelne Bodenventile 12, 14, 16 mit einzelnen Kammern des Tanks verbunden ist. Befüllkupplungen, die den Bodenventilen zugeordnet sind zum Befüllen der einzelnen Kammern, gegebenenfalls mit Flüssigkeiten unterschiedlicher Zusammensetzung sind hier nicht gezeigt. Über die Bodenventile 12 bis 16 können die einzelnen Kammern entleert werden. Zur Betätigung der Bodenventile dient eine spezielle Steuervorrichtung, die hier ebenfalls nicht dargestellt ist. In diesem Zusammenhang wird beispielsweise auf den Stand der Technik gemäß DE 3007688 C2 oder EP 0895960 B1 verwiesen.

Der Kollektor 10 ist über einen Krümmer 18 mit einer Abgabeleitung 20 verbunden. Während der Kollektor 10 annähernd horizontal angeordnet ist, hat die Abgabeleitung 20 ein Gefälle mit einem Winkel von z. B. 20°. Nahe dem Ende der Abgabeleitung 20 ist ein Abgabeventil 22 angeordnet, das von einer Steuervorrichtung 24 gesteuert wird. Das Ende der Abgabeleitung 22 kann mit einem Abgabeschlauch (nicht gezeigt) zur Schwerkraftabgabe in einen bereitstehenden Behälter verbunden werden.

Aufströmseitig vom Abgabeventil 22 ist ein Volumenmesser 24 angeordnet, der z. B. einen Impeller 26 aufweist. Ein derartiger Volumenmesser ist an sich bekannt.

Aufströmseitig vom Volumenmesser 24 ist ein Gleichrichter 28 in der Abgabeleitung 20 angeordnet, beispielsweise von einer Form, wie sie in US 5529093 gezeigt ist. Annährend auf der halben Länge des Krümmers 18 ist ein Leitungsstück 30 eingeflanscht, das einen Gasblasensensor 32 enthält, wie er ebenfalls an sich bekannt und z. B. in der EP 0895960 geschrieben ist. Er misst den Anteil des Gases in der abgegebenen Flüssigkeit, wobei das Signal des Gasblasensensors 32 über einen Signalgeber 34 an die Steuervorrichtung 24 gegeben wird. Ein Leermeldesensor 36 ist aufströmseitig vom Abgabeventil 22 angeordnet und sein Signal wird über einen Signalgeber 38 auf die Steuervorrichtung 24 gegeben. Auch dem Impeller 26 ist ein Signalgeber 40 zugeordnet.

Am Ausgang des Krümmers 18 ist in der Abgabeleitung 20 eine Leitvorrichtung 42 angeordnet, beispielsweise in einem Abstand von 10 - 15 cm vom Gleichrichter 28. Wie aus Figur 2 zu erkennen, ist die Leitvorrichtung 42 in einem eingeflanschten Rohrstück 44 angeordnet, wobei in Figur 2 ein Flansch 46 zu erkennen ist. Innerhalb des Rohrstücks befinden sich Leitbleche 48 bzw. 50, die zu einem Kreuz angeordnet sind, wobei die Mitte des Kreuzes auf der Achse des Rohrstücks liegt. Das Kreuz teilt den Flüssigkeitsstrom in vier gleichgroße Quadranten. Die Länge der Leitvorrichtung ist größer als der Innendurchmesser der Abgabeleitung 20 und etwas größer oder etwas kleiner als der doppelte Durchmesser der Abgabeleitung 20.

Die beschriebene Leitvorrichtung ermöglicht eine Vergleichmäßigung bzw. Einprägung der Strömung auf dem kurzen Weg zum Gleichrichter 28, auch wenn die Strömungsgeschwindigkeit bei einem zugelassenen Unterdruck bis zum Kollektor relativ hoch ist.

Die gezeigte Anlage arbeitet ähnlich der nach EP 0895960. Beim Öffnen eines der Bodenventile 12 bis 16 fließt die Flüssigkeit bis zum Abgabeventil 22 und füllt das komplette Volumen von Kollektor 10, Krümmer 18 und Abgabeleitung 20 aus. Die hierbei entweichende Luft kann in ein Leervolumen einer Kammer strömen (nicht gezeigt). Mit Hilfe des Gasblasensensors, der etwa wie gemäß DE 19540884 A1 ausgebildet ist, wird festgestellt, wann die Abgabeleitung 20 komplett gefüllt ist. Nunmehr kann der Abgabevorgang beginnen, indem das Abgabeventil 32 über die Steuervorrichtung 24 geöffnet wird. Die abgegebene Menge wird mit dem Volumenzähler 24 gemessen und in der Steuervorrichtung 24 registriert. Bei einer Totalentleerung der entsprechenden Kammer beginnt der Pegel der Flüssigkeit in der Kammer sich dem entsprechenden Bodenventil zu nähern. Durch Wirbelbildung in der Kammer wird Luft bei der Abgabe mitgerissen, was mit Hilfe des Gasblasensensors erfasst wird. Die Steuervorrichtung 24 reduziert darauf den Strömungsquerschnitt des Abgabeventils 22, um die Strömungsgeschwindigkeit zu verlangsamen und damit das Mitnehmen von Luft zu reduzieren. Die Drosselung findet bei einem erhöhten Gasanteil statt, der aber noch nicht zu einer Verfälschung des Messergebnisses führt, d.h. vor Ausbildung eines Strudels am Boden der Tankkammer. Vorher bildet sich ein feiner "Gasfaden", der vom Detektor bereits erkannt wird. Sobald der Gasblasensensor 32 feststellt, dass die Flüssigkeitssäule den Sensor 32 passiert, wird das Ventil 22 vollständig geschlossen. Nunmehr erfolgt die Restmengenentleerung dadurch, dass das Abgabeventil 22 erneut geöffnet wird, ohne das jedoch eine Zählung des Volumens über den Volumenmesser 24 stattfindet. Das Volumen unterhalb des Gasblasensensors 32 ist bekannt und kann daher nach der Restentleerung in der Steuervorrichtung entsprechend addiert werden. Sobald der Leermeldesensor 36 festgestellt hat, dass die Abgabeleitung 20 geleert ist, wird das Abgabeventil 22 wieder geschlossen.

Der bei der Abgabe von Flüssigkeit bis zum Kollektor zugelassene Unterdruck erhöht die Abgabeleistung beträchtlich, ohne dass sich dies negativ auf die Genauigkeit der Volumenmessung auswirkt.

## Patentansprüche

1. Anlage zur Abgabe von Flüssigkeit aus einem mehrere Kammern enthaltenden Tankwagen durch Schwerkraft, sowie zum Messen des abgegebenen Flüssigkeitsvolumens, bei einem annähernd waagerechten bzw. mit leichtem Gefälle versehenen Kollektor (10) zwischen Bodenventilen (12 bis 16) der Kammern und Befüllkupplungen der Kammern, der über einen Krümmer (18) mit einer ein Gefälle aufweisenden Abgabeleitung (20) verbunden ist, einem Abgabeventil (22) in der Abgabeleitung, einem Volumenzähler (26) aufströmseitig vom Abgabeventil (22), einem Gasblasensensor (32) aufströmseitig vom Volumenzähler (26), der den Gasanteil der Flüssigkeit misst und ein entsprechendes Signal auf eine das Abgabeventil (22) steuernde Steuervorrichtung (24) gibt, um durch Drosselung das Mitnehmen von Luft zu reduzieren, wobei ein Gleichrichter (28) unmittelbar aufströmseitig vom Volumenzähler (24) und abströmseitig vom Gasblasensensor (32) vorgesehen ist und die Abgabeleitung (20) mit zugeordneten Strömungsbauteilen unter Wegfall eines Drucksensors so ausgelegt ist, dass bei Abgabe von Flüssigkeit ein Unterdruck über den Gleichrichter (28) und den Gasblasensensor (32) hinaus - entgegen der Strömungsrichtung gesehen - zugelassen werden kann, und wobei zwischen dem Ausgang des Krümmers (18) und im Abstand zum Gleichrichter (28) in der Abgabeleitung (20) eine Leitvorrichtung (42) in Form von in Strömungsrichtung sich erstreckenden Leitblechen (48, 50) angeordnet ist, wobei die Leitbleche (48, 50) ein Kreuz bilden, und das eine Leitblech des Kreuzes annähernd in einer den Krümmungsradius aufnehmenden Ebene und das andere Leitblech annähernd senkrecht dazu verläuft.

2. Anlage nach Anspruch 1, **dadurch gekennzeichnet, dass** der Abstand der Leitvorrichtung (42) vom Gleichrichter (28) annähernd 10 - 15 cm beträgt.

3. Anlage nach Anspruch 1 oder 2, **dadurch gekennzeichnet, dass** der Gasblasensensor (32) vor dem Krümmer (18) angeordnet ist.

4. Anlage nach einem der Ansprüche 1 bis 3, **dadurch gekennzeichnet, dass** ein Leermeldesensor (36) aufströmseitig nahe dem Abgabeventil (22) angeordnet ist.

5. Verfahren zur Abgabe von Flüssigkeit aus einem mehrere Kammern enthaltenden Tankwagen durch Schwerkraft sowie zum Messen des abgegebenen Flüssigkeitsvolumens in einer Anlage mit einem annähernd waagerechten Kollektor (10) zwischen Bodenventilen (12 bis 16) und Befüllkupplungen der Kammern, der über einen Krümmer mit einer ein Gefälle aufweisenden Abgabeleitung (20) verbunden ist, wobei in der Abgabeleitung (20) ein Abgabeventil (22), ein Volumenzähler (26) aufströmseitig vom Abgabeventil (22), ein Gasblasensensor (32) aufströmseitig vom Volumenzähler (26) angeordnet sind, wobei der Gasblasensensor (32) den Gasanteil der Flüssigkeit misst und ein entsprechendes Signal auf eine das Abgabeventil (22) steuernde Steuervorrichtung (24) gibt, wobei bei Abgabe von Flüssigkeit ein Unterdruck über einen Gleichrichter (28) aufströmseitig des Volumenzählers (26) und den Gasblasensensor aufströmseitig vom Gleichrichter hinaus unter Wegfall eines Drucksensors - entgegen der Strömungsrichtung gesehen - zugelassen wird, und wobei zwischen dem Ausgang des Krümmers (18) und im Abstand zum Gleichrichter (28) in der Abgabeleitung (20) eine Leitvorrichtung (42) in Form von in Strömungsrichtung sich erstreckenden Leitblechen (48, 50) angeordnet ist, wobei die Leitbleche (48, 50) ein Kreuz bilden, und das eine Leitblech des Kreuzes annähernd in einer den Krümmungsradius aufnehmenden Ebene und das andere Leitblech annähernd senkrecht dazu verläuft.

6. Verfahren nach Anspruch 5, **dadurch gekennzeichnet, dass** ein Unterdruck bis in den Kollektor hinein zugelassen wird.

## Claims

1. Installation for dispensing liquid from a tank truck containing several chambers by gravity, and for measuring the volume of liquid dispensed, with a collector (10) being approximately horizontal or with a slight slope, the collector (10) being provided between bottom valves (12 to 16) of the chambers and filling ports of the chambers, and connected via a manifold (18) to a delivery line (20) having a slope, a delivery valve (22) in the delivery line, a volume counter (26) upstream of the delivery valve (22), a gas bubble sensor (32) upstream of the volume counter (26), which measures the gas content of the liquid and gives a corresponding signal to a control device (24) which controls the delivery valve (22) in order to reduce the entrainment of air by throttling, a rectifier (28) being provided directly upstream of the volume counter (24) and downstream of the gas bubble sensor (32), and the discharge line (20) with associated flow components being designed in such a way that a pressure sensor is omitted, in that, when liquid is dispensed, a negative pressure beyond the rectifier (28) and the gas-bladder sensor (32) - viewed in the opposite direction to the direction of flow - can be permitted, and a guide device (42) in the form of baffles (48, 50) extending in the direction of flow being provided in the delivery line (20) between the outlet of the bend (18) and at a distance from the rectifier (28), the baffles (48, 50) forming a cross, one baffle of the cross extending approximately in a plane receiving the radius of curvature and the other baffle extending approximately perpendicular thereto.

2. Installation according to claim 1, **characterized in that** the distance of the guide device (42) from the rectifier (28) is approximately 10 - 15 cm.

3. Installation according to claim 1 or 2, **characterized in that** the gas bubble sensor (32) is arranged in front of the manifold (18).

4. Installation according to one of claims 1 to 3, **characterized in that** an empty signal sensor (36) is arranged on the upstream side near the delivery valve (22).

5. Method for dispensing liquid from a tank truck containing several chambers by gravity and for measuring the volume of liquid dispensed, with a collector (10) being approximately horizontal or with a slight slope, the collector (10) being provided between bottom valves (12 to 16) of the chambers and filling ports of the chambers, and connected via a manifold (18) to a delivery line (20) having a slope, a delivery valve (22) in the delivery line, a volume counter (26) upstream of the delivery valve (22), a gas bubble sensor (32) upstream of the volume counter (26), which measures the gas content of the liquid and gives a corresponding signal to a control device (24) which controls the delivery valve (22) in order to reduce the entrainment of air by throttling, a rectifier (28) being provided directly upstream of the volume counter (24) and downstream of the gas bubble sensor (32), and the discharge line (20) with associated flow components being designed in such a way that a pressure sensor is omitted, in that, when liquid is dispensed, a negative pressure beyond the rectifier (28) and the gas-bladder sensor (32) - viewed in the opposite direction to the direction of flow - can be permitted, and a guide device (42) in the form of baffles (48, 50) extending in the direction of flow being provided in the delivery line (20) between the outlet of the bend (18) and at a distance from the rectifier (28), the baffles (48, 50) forming a cross, one baffle of the cross extending approximately in a plane receiving the radius of curvature and the other baffle extending approximately perpendicular thereto.

6. Method according to Claim 5, **characterized in that** a negative pressure is permitted up to the collector.

## Revendications

1. Installation pour la distribution de liquide par la force de gravité à partir d'un camion-citerne comprenant plusieurs chambres, et pour la mesure du volume de liquide distribué, au niveau d'un collecteur (10) approximativement horizontal ou présentant une légère pente, entre des soupapes de fond (12 à 16) des chambres et des raccords de remplissage des chambres, lequel est relié à une conduite de distribution (20) présentant une pente par le biais d'un coude (18), une soupape de distribution (22) dans la conduite de distribution, un compteur volumique (26) en amont de la soupape de distribution (22), un capteur de bulles de gaz (32) en amont du compteur volumique (26), lequel mesure la concentration en gaz dans le liquide et fournit un signal correspondant à un dispositif de commande (24) commandant la soupape de distribution (22), afin de réduire la prise d'air à l'aide d'un étranglement, un redresseur (28) étant prévu immédiatement en amont du compteur volumique (24) et en aval du capteur de bulles de gaz (32) et la conduite de distribution (20) étant conçue avec des composants d'écoulement correspondants en l'absence de capteur de pression, de telle façon que lors de la distribution de liquide, une dépression est permise au-delà du redresseur (28) et du capteur de bulles de gaz (32) - vu contre la direction d'écoulement, et dans laquelle un dispositif de guidage (42) sous la forme de tôles de guidage (48, 50) s'étendant dans la direction d'écoulement est disposé entre la sortie du coude (18) et à distance du redresseur (28) dans la conduite de distribution (20), les tôles de guidage (48, 50) formant une croix, où l'une des tôles de guidage de la croix s'étend approximativement dans un plan recevant le rayon de courbure et l'autre tôle de guidage s'étend approximativement perpendiculairement à celle-ci.

2. Installation selon la revendication 1, **caractérisée en ce que** la distance entre le dispositif de guidage (42) et le redresseur (28) mesure approximativement de 10 à 15 cm.

3. Installation selon la revendication 1 ou 2, **caractérisée en ce que** le capteur de bulles de gaz (32) est disposé avant le coude (18).

4. Installation selon l'une des revendications 1 à 3, **caractérisée en ce qu'**un capteur de niveau (36) est disposé en amont à proximité de la soupape de distribution (22).

5. Procédé pour la distribution de liquide par la force de gravité à partir d'un camion-citerne comprenant plusieurs chambres et pour la mesure du volume de liquide distribué dans une installation avec un collecteur (10) approximativement horizontal entre des soupapes de fond (12 à 16) et des raccords de remplissage des chambres, lequel est relié à une conduite de distribution (20) présentant une pente par le biais d'un coude, dans lequel une soupape de distribution (22), un compteur volumique (26) situé en amont de la soupape de distribution (22) et un capteur de bulles de gaz (32) situé en amont du compteur volumique (26) sont disposés dans la conduite de distribution (20), dans lequel le capteur de bulles de gaz (32) mesure la concentration en gaz dans le liquide et fournit un signal correspondant à un dispositif de commande (24) commandant la soupape de distribution (22), dans lequel, lors de la distribution de liquide, une dépression est permise au-delà d'un redresseur (28) en amont du compteur volumique (24) et du capteur de bulles de gaz en amont du redresseur, en l'absence de capteur de pression - vu contre la direction d'écoulement, et dans lequel un dispositif de guidage (42) sous la forme de tôles de guidage (48, 50) s'étendant dans la direction d'écoulement est disposé entre la sortie du coude (18) et à distance du redresseur (28) dans la conduite de distribution (20), les tôles de guidage (48, 50) formant une croix, et l'une des tôles de guidage de la croix s'étend approximativement dans un plan recevant le rayon de courbure et l'autre tôle de guidage s'étend approximativement perpendiculairement à celle-ci.

6. Procédé selon la revendication 5, **caractérisé en ce qu'**une dépression est permise jusqu'à l'intérieur du collecteur.
